Europäisches Patentamt

European Patent Office

Office européen des brevets

(19)

(11) Veröffentlichungsnummer: **0 155 692**

**A2**

(12) **EUROPÄISCHE PATENTANMELDUNG**

(21) Anmeldenummer: 85103337.3

(22) Anmeldetag: 22.03.85

(51) Int. Cl.⁴: **A 01 C 7/20**
**A 01 B 35/22**

(30) Priorität: 23.03.84 US 592975

(43) Veröffentlichungstag der Anmeldung:
.25.09.85 Patentblatt 85/39

(84) Benannte Vertragsstaaten:
DE FR GB

(71) Anmelder: **DEERE & COMPANY**
**1 John Deere Road**
**Moline Illinois 61265(US)**

(72) Erfinder: **Meyer, Thomas Joe**
**3821 Belle Avenue**
**Davenport Iowa 52807(US)**

(74) Vertreter: **Fricke, Joachim, Dr. et al,**
**Dr. R. Döring, Dr. J. Fricke, Patentanwälte**
**Josephspitalstrasse 7**
**D-8000 München 2(DE)**

(54) Landwirtschaftliche Maschine.

(57) Es ist eine landwirtschaftliche Maschine mit einem Tragteil vorgesehen, an dem ein in senkrechter Ebene auf- und abbewegbares Gerät, wie Sämaschine, über im gegenseitigen Querabstand angeordnete Parallelogrammgestänge angebracht ist. Auf die Parallelogrammgestänge wirkt eine das Gerät nach unten vorspannende Vorspanneinrichtung mit wenigstens einer Feder zusammenb. Die Federn sind dabei im wesentlichen senkrecht zur Langsrichtung der Lenker angeordnet. Zur Verstellung der Federvorspannkraft ist eine Verbindungseinrichtung vorgesehen, die einen Querträger aufweist, der auf der Oberkante der oberen Lenker der Parallelogrammgestänge von vorne nach hinten und umgekehrt verschiebbar ist. An diesem Querträger sind die oberen Enden der Federn verankert, so daß alle Federn mit einem Mal verstellt werden können. eine einfache Verriegelungseinrichtung erlaubt ein leichtes Lösen der Verriegelung und ein Verstellen und ein leichtes sicheres Verriegeln der eingestellten Stellung des Querträgers auf den oberen Lenkern. Dazu ist ein an dem Tragteil schwenkbar verankertes und sich nach hinten erstreckendes Verriegelungselement mit Rastausnehmungen vorgesehen, das in einer Längstasche in der Mitte des Querträgers verschiebbar ist. Die Tasche weist ein oberes Querglied auf, das in eine der Ausnehmungen in Eingriff gebracht werden kann, wobei die Anordnung so getroffen ist, daß in der Eingriffstellung das am Tragteil verankerte Element auf dem Boden der Tasche fest aufliegt. Durch eine relative Schwenkbewegung zwischen den Verriegelungsteilen läßt sich die Verriegelung aufheben, eine Vestellung vornehmen und die Verriegelung in der neuen Stellung wieder herstellen.

EP 0 155 692 A2

Croydon Printing Company Ltd.

Die Erfindung betrifft eine landwirtschaftliche Maschine mit den Merkmalen des Oberbegriffs des Anspruchs 1. Ein typisches Beispiel für eine solche landwirtschaftliche Maschine ist z.B. eine Sämaschine. Diese kann als typisch für landwirtshaftliche Geräte angesehen werden, welche nachlaufend mit einem quer zu der Maschine verlaufenden Tragteil oder Werkzeugträger in einer solchen Weise verbunden ist, daß das Gerät selbst gegenüber dem Werkzeugträger eine relative Bewegung in einer senkrechten Ebene ausführen kann. Eine landwirtschaftliche Maschine dieser Art zeigt z.B. die US-PS 30 23 718. Üblicherweise weist das Gerät einen Tragteil auf, mit dem es an dem quer verlaufenden Werkzeugträger befestigt werden kann. An diesem Tragteil wird das Gerät mit Hilfe von Parallelgestängen unterstützt. Um den notwendigen Bodeneingriff zu gewährleisten, ist eine Vorspanneinrichtung vorgesehen, die auf das Gerät selbst mit Hilfe von einer oder mehreren Federn eine nach unten gerichtete Vorspannkraft ausübt. Bei der bekannten Vorrichtung nach der bekannten US-PS ist es möglich, die auszuübende Kraft der Federn in vorbestimmter Weise zu verändern um so die Vorlast auf das Gerät einzustellen. Bei der bekannten Anordnung sind zwei parallel zueinander wirksame und angeordnete Zugfedern vorgesehen, deren rückwärtige Enden an einem starren Querteil verankert sind, welches die beiden oberen Lenker der beiden im gegenseitigen Abstand angeordneten Parallelogrammgestänge starr miteinander verbindet. Von dort erstrecken sich die beiden Federn nach vorne zu dem Tragteil. Ihre vorderen Enden sind an Laschen verankert, die durch einen Schlitz des Tragteils ragen und in diesem Schlitz in dessen Längsrichtung verstellt weden können, wobei auf der abgewendeten Seite der vorderen Wand des Tragteils Rasten vorgesehen sind, in die die Laschen zum Eingriff gebracht werden können. Jede Lasche weist einen Griffteil auf, so dß jede Feder einzeln in Längsrichtung des sich im wesentlichen senkrecht erstreckenden Schlitzes der vorderen Stirnwand des Tragteils verstellt werden kann, welche vordere Wand sich im wesentlichen senkrecht erstreckt und mit den Enden aller Lenker der Parallelogrammgestänge gelenkig verbunden ist. Auf diese Weise kann die Länge der Federn und damit die auf das Gerät ausgeübte Vorspannung verändert werden. Ein Nachteil dieser bekannten Anordnung besteht darin, daß jede Feder nur einzeln eingestellt werden kann und nicht meheree Federn gleichzeitig oder einheitlich. Um an die verstellbaren Enden der Federn herankommen zu können, sind diese nicht besonders günstig in Bezug auf die gewünschte Kraftrichtung angeordnet. Außerdem sind die Verstellenden nicht besonders leicht zugänglich.

Bei anderen landwirtschaftlichen Maschinen ähnlicher Art sind zum Verstellen der Vorspannung besondere Werkzeuge notwendig, was die Herstellung und die Handhabung erschwert.

Es ist Aufgabe der Erfindung, eine landwirtschaftliche Maschine mit den Merkmalen des Oberbegriffs so weiterzubilden, daß bei vereinfachtem Aufbau eine wesentlich leichtere und schnellere Handhabung bei Verstellung der Vorspannkraft der Vorspanneinrichtung ermöglicht werden.

Diese Aufgabe wird durch die Merkmale des Anspruchs 1 gelöst.

Hierbei liegt die Verbindungseinrichtung an einer wesentlich leichter zugänglichen Stelle. Dennoch wird es möglich die Federn mit ihrer Kraftrichtung wesentlich günstiger in Bezug auf die auf das Gerät auszuübende Vorspannung anzuordnen, nämlich in einer nahezu vertikalen Ebene. Vor allem lassen sich mit Hilfe der Verbindungseinrichtung auch mehrere parallel geschaltete Federn
gleichzeitig und gleichförmig in ihrer Vorspannung verändern. Dadurch wird auch die Handhabung wesentlich vereinfacht. Die Unteransprüche zeigen Merkmale auf, die
eine vorteilhafte Weiterbildung der Lehre des Anspruchs 1
erbringen. Durch den auf der Oberseite der oberen Lenker der Parallelogrammgestänge gleitenden Querträger
lassen sich die oberen Enden aller verwendeten Federn
der Vorspanneinrichtungen an einem einzigen Verstellglied verankern.

Dabei ist ganz besonders vorteilhaft, wenn das eine Element an einem langgestreckten Verbindungsglied vorgesehen ist, dessen vorderes Ende an dem Tragteil angebracht ist und daß sich unter Kreuzen des Querträgers
nach hinten erstreckt. Auf diese Weise läßt sich bei
geringem Kraftaufwand und ohne nennenswerte Veränderung
der Kraft, unter der die Federn stehen, eine sichere
Verriegelung und Aufhebung der Verriegelung und damit
eine Verstellung vornehmen, wie dies im einzelnen Gegenstand der Unteransprüche 5 bis 9 ist.

Die Anordnung ist außerordentlich sicher und verhindert,
daß bei dem rauhen Betrieb auf dem Acker eine unerwünschte Verstellung stattfindet. Die Geometrie der Anordnung
ist bereits so, daß kleine Veränderungen der nach unten
gerichteten Kraft über den ganzen Bereich der Bewegung
der Parallelogrammgestänge bei allen Kraftjustierungen
zur Verfügung stehen. Wenn als Vorspannfedern Zugfedern
verwendet werden, verändert die Geometrie den Momentarm, um die Zunahme der Kraft zu verschieben, die durch
die Federn ausgeübt wird, wenn diese gedehnt sind. Es
ist mit der neuen Anordnung auch möglich, kräftigere
Federn mit höherer anfänglicher Spannung und größerer
Federleistung zu verwenden.

Die Erfindung wird nachfolgend anhand schematischer Zeichnungen an einem Ausführungsbeispiel näher erläutert, das bevorzugt ist und bei dessen Beschreibung weitere Merkmale und Vorteile deutlich werden.

Es zeigen:

Figur 1 eine perspektivische Ansicht einer Maschine gemäß der Erfindung.

Figur 2 eine Seitenansicht der Anordnung nach Fig. 1.

Figur 3 eine rückwärtige Ansicht.

Figur 4 in auseinandergezogener Stellung und in Seitenansicht Teile der Verstelleinrichtung.

Figur 5 die in Fig. 4 gezeigten Teile in ihrem funktionellen Zusammenhang.

Figur 6 einen Querschnitt entlang der Schnittlinie VI-VI der Figur 4 und

Figur 7 einen Querschnitt entlang der Schnittlinie VII-VII der Figur 4.

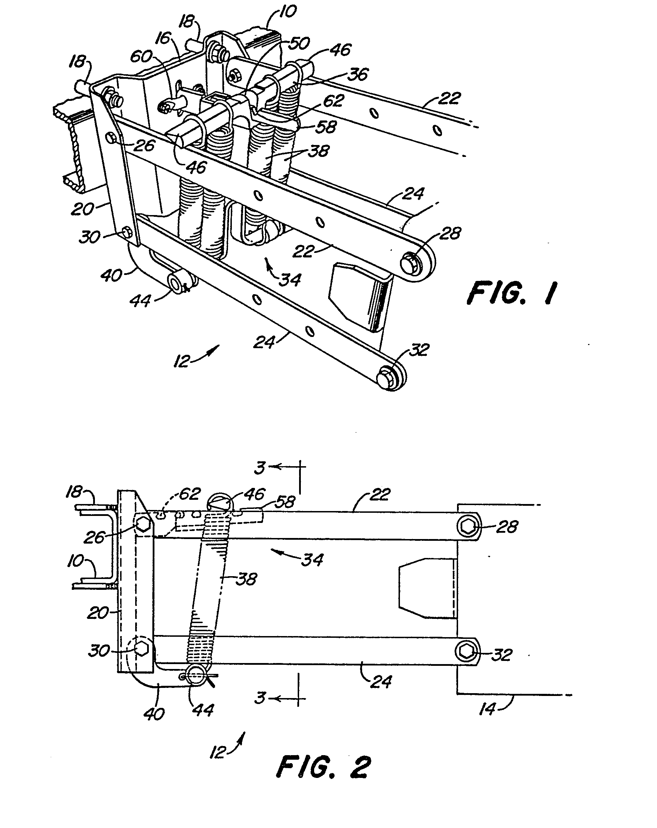

Figur 1 zeigt in perspektivischer Darstellung und im Ausschnitt wesentliche Teile der Maschine gemäß der Erfindung. Es handelt sich um eine typische landwirtschaftliche Maschine irgend eines bekannten Typs. Diese wird in der Figur lediglich repräsentiert durch eine Trageinrichtung einerseits, die hier in Form eines typischen Werkzeugtragbalkens 10 gezeigt ist, und durch ein den Charakter der landwirtschaftlichen Maschine bestimmendes Gerät 14, das mit dem Werkzeugträger 10 durch zwei im gegenseitigen Querabstand angeordnete Parallelogrammgestänge 12 verbunden ist. Es wird hier angenommen, daß das Gerät 14 eine Sämaschine ist. Die Maschine kann über

ein Feld in Fig. 1 von rechts nach links gezogen werden, so daß typischerweise das Gerät 14 dem Werkzeugtragbalken 10 nachläuft. Zur Montage an dem Werkzeugtragbalken 10 ist ein Tragteil 16 in Form einer Montageplatte vorgesehen, die mittels Bolzen 18 oder in anderer Weise starr an der Rückseite des Werkzeugtragbalkens festlegbar ist. Der Tragteil 16 weist im seitlichen Abstand angeordnete und im wesentlichen aufrechte Flansche 20 auf, die zu den Mitteln gehören, mit Hilfe derer die vorderen Enden der Parallelogrammgestänge an dem Tragteil 16 angebracht sind. Jedes Parallelogrammgestänge weist obere und untere Lenker 22 und 24 auf, die oberen Lenker sind mit ihren vorderen Ende bei 26 an den Flanschen des Tragteils 16 und mit ihren rückwärtigen Enden bei 28 an dem Gerät 14 angelenkt. Die unteren Lenker 24 weisen vordere und hintere Anlenkstellen 30 bzw. 32 auf, wobei die vorderen Anlenkstellen ebenfalls den Flanschen des Tragteils 16 und die rückwärtigen Anlenkstellen 32 dem Gerät 14 zugeordnet sind. Aus der bisherigen Beschreibung ist ersichtlich, daß die Parallelogrammlenker das Gerät 14 so unterstützen, daß dieses auf und ab gehende Bewegungen gegenüber dem Werkzeugtragbalken 10 ausführen können, der, wie dies üblich ist, durch Räder (nicht gezeigt) in einem festen Abstand oberhalb des Bodens unterstützt wird. Jede geeignete Anhebe- und Absenkeinrichtung kann vorgesehen sein, um das Gerät in die Arbeitsstellung zu bringen und aus dieser auszuheben.

Wie oben erwähnt ist es bei vielen derartigen landwirtschaftichen Geräte üblich, auf das Gerät einen nach unten gerichtete Vorspannung auszuüben, um die Arbeitsfunktion zu verbessern. Eine Sämaschine, wie sie hier als repräsentativ für solche Geräte gezeigt ist, steht unter einer solchen Vorspannkraft, um so die in den Boden eingreifenden Teile (nicht gezeigt) der Sämaschine besser zur Wirkung zu bringen. Dies ist ein dem Fachmann bekannter Sachverhalt.

6

Die zur Ausübung der nach unten wirkenden Kräfte dienende Vorspaneinrichtung bei der erfindungsgemäßen landwirtschaftlichen Maschine ist insgesamt mit der Bezugsziffer 34 bezeichnet. Sie umfaßt mehrere parallel geschaltete Federn 38, hier Zugfedern, auf, die mit ihrem oberen Ende über eine Verbindungseinrichtung mit den oberen Lenkern 22 der Parallelogrammgestänge verbunden sind. Die Verbindungseinrichtung weist im dargetellten Beispiel einen Querträger 36 auf. Die unteren Enden der Federn 38 sind über ein Verankerungselement 40 mit dem Tragteil 16 verbunden. Zu diesem Zweck sind die hebelartigen Verankerungselemente 40 mit ihren vorderen Enden an der Anlenkstelle 30 der vorderen Enden der unteren Lenker 24 an dem Tragteil 16 angelenkt, wie dies deutlich aus Fig. 2 hervorgeht. Ein sich quer erstreckendes Jochteil 42 nimmt die unteren Enden der Federn 38 auf, während seine äußeren Enden 44 jeweils mit den rückwärtigen Enden der Verankerungsteile 40 verbunden sind. Das Jochteil 42 liegt somit unter den unteren Lenkers 24 der Parallelogrammgestänge.

Ferner sind die unteren Enden der Federn 38 im Abstand hinter dem Tragteil 16 gehalten. Diese Anordnung in Verbindung mit dem Querträger 36 der Verbindungseinrichtung für die oberen Enden der Federn ermöglicht eine im wesentlichen senkrecht zu der Länge der Lenker 22.24 verlaufende Orientierung der Federn 38.

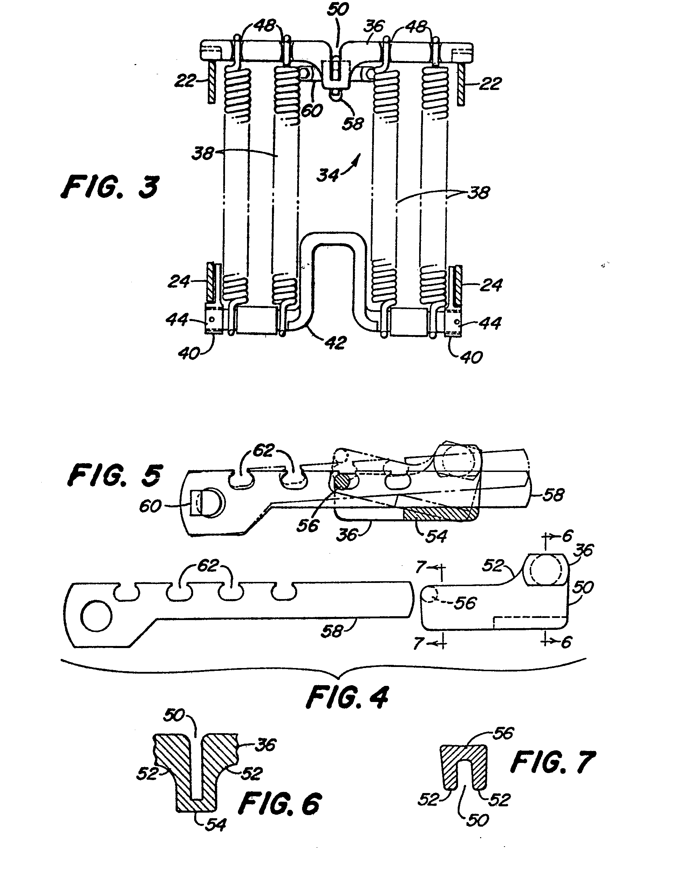

Der obere Querträger 36 überbrückt den gegenseitigen Abstand der oberen Lenker 22. Die Enden 46 des Querträgers stützen sich auf der Oberseite der oberen Lenker 22 ab und üben auf diese und damit auf das Gerät eine nach unten gerichtete Kraft aus. Bei der dargestellten Ausführungsform sind vier im wesentlichen ähnliche Federn 38 vorgesehen, die jeweils paarweise beiderseits der vertikalen Längsmitte der Anordnung angeordnet sind, wie dies insb. die Figuren 1 und 3 zeigen. Damit sind jeweils zwei Federn 38 jedem Parallelogrammgestänge zugeordnet. Der Querträger 36 kann, wie dargestellt, mit Umfangsausnehmungen oder Nuten 48 versehen sein, in welche die hakenförmigen Enden der Federn einrasten. Wie Fig. 3 zeigt, ist den beiden Parallelogrammgestängen jeweils ein Verankerungselement 40 und ein Abschnitt des Jochteils 42, 44 zugeordnet, so daß auch die unteren Enden der Federn 38 paarweise den Parallelogrammgestängen zugeordnet sind.

Der Querträger 36 ist bei der bevorzugten Ausführungsform einstückig ausgebildet und kann ein Stahlgußteil oder dgl. sein und weist in seinem zentralen Bereich eine Tasche 50 auf. Diese wird durch zwei im gegenseitigen seitlichen Abstand angeordnete und sich von vorne nach hinten erstreckende senkrechte Wände 52 und einen quer dazu verlaufenden, einstückig damit verbundenen Bodenabschnitt 54 gebildet (vgl. insb. die Figuren 4 bis 7). Der Bodenabschnitt endet, wie insb. die Figuren 4 und 5 zeigen, im Abstand hinter dem vorderen Ende der Tasche 50, so daß sich die Seitenwände 52 über den Bodenabschnitt 54 nach vorne hinaus erstrecken. In ihrem vorderen oberen Bereich sind dies Seitenwände starr miteinander durch einen Querteil 56 verbunden. Mit der Tasche wirkt ein Verriegelungselement 58 in Form eines langgestreckten Stahlbandes zusammen, dessen Querschnitt so ausgebildet it, daß das Element 58 über einen Bereich seiner Länge von der Tasche 50 aufgenommen wird, wie dies insb. die Figuren 3 und 5 zeigen. Die Anordnung ist so getroffen, daß die Tasche nach vorne und nach rückwärts offen ist, so daß das Element 58 in der Tasche in Längsrichtung verschiebbar ist, wenn die Verbindungseinrichtung entriegelt ist. Ist die Verbindungseinrichtung jedoch verriegelt, liegt die Unterkant des Elementes 58 auf dem Bodenabschnitt 54 der Tasche auf, wie dies Fig. 5 in der ausgezogenen Stellung zeigt. Das vordere Ende des Elementes 58 ist an der Rückseite des Tragteils 16 durch eine quer verlaufende Vebindungseinrichtung 60 schwenkbar angelenkt. Die Schwenkachse des Teils 58 ist im dargestellten bevorzugten Ausführungsbeispiel koaxial mit den Schwenkachsen der Anlenkpunkte 26 der oberen Lenker 22 an den Flanschen 20 des Tragteils 16 angeordnet. Figur 4 zeigt den Querträger 36 und das Element 58 in auseinandergenommener Stellung jeweils in Seitenansicht. In Verbindung mit den Querschnittsdarstellungennach Fig. 6 und 7 zeigt die Fig. 4 die Form und die Abmessungen der Tasche 50 des Querträgers 36. Fig. 5 zeigt in gleicher Darstellung wie Fig. 4 die beiden Teile in ihrem Eingriff und zwar in ausgezogener Stellung in verriegeltem Eingriff und in strichpunzierter Darstellung in entriegelter relativer Stellung.

Auf der Oberseit des Elementes 58 sind mehrere in gegenseitigem Abstand angeordnete Rast- oder Riegelausnehmungen 62 vorgesehen, in welche wahlweise der vordere Querabschnitt 56 im oberen Bereich der Tasche 50 einrasten kann, wie dies in der Schnittdarstellung nach Fig. 5 gezeigt ist. In der Eingriffstellung nach Fig. 5 liegt das Element 58, wie schon erwähnt, mit seiner Unterkante auf dem Bobenabschnitt 54 der Tasche fest auf. Dadurch sind die beiden Teile fest miteinander verriegelt und ist die Lage des Querträgers 36 auf der Oberkante der oberen Lenker 22 und damit der Abstand des Querträgers 36 von dem Tragteil 16 festgelegt. Da die Kraft der Federn im wesentlichen senkrecht zur Längserstreckung der Lenker 22 gerichtet ist, stehen die in Eingriff stehenden Teile 56,58,62 und die Verbindung 60 unter nur relativ geringer Belastung, die jedoch in Verbindung mit der Formgebung der Teile ausreicht, um ein unbeabsichtigtes Entriegeln zuverlässig auch unter dem rauhen Betrieb auf dem Acker zu verhindern. Durch den auf diese Weise festgelegten Abstand des Querträges 36 von dem Tragteil 16 wird die Vorspannung der Federn 38 bestimmt. Durch Wahl der Rastausnehmung 62 läßt sich so die jeweils gewünschte Vorspannung einstellung, und zwar aller Federelemente gleichzeitig und im gleichen Maße.

Die Verstellung läßt sich auf einfache Weise vornehmen. Sie erfolgt, wenn die Sämaschine 14 sich in der angehobenen oder Transportstellung befindet. Die Bedienungsperson oder der Fahrer löst dazu den Eingriff zwischen dem Element 58 und dem Querträger 36. Dazu wird das Element 58 um die vordere Kante des Bodenabschnittes 54 geschwenkt, indem das rückwärtige Ende des Elementes 58 aus der ausgezogenen Stellung nach Fig. 5 in die strichpunktierte Stellung angehoben wird. Es ist ersichtlich, daß der diagonale Abstand zwischen der vorderen Kante des Bodenabschnittes 54 und dem zur Verriegelung dienenden Querabschnitt 56 größer ist als die vertikalen Abmessungen des Elememtes 58. Die oben bechriebene Schwenkbewegung nach oben führt somit dazu, daß das Verriegelungselement 56 aus der betreffenden Verriegelungsausnehmung 62 ausgehoben wird, wie dies strichpunktiert in Fig. 5 gezeigt ist. Es kann in dieser Stellung somit der Querträger 36 längs des Elementes 58 verstellt werden, und zwar nach vorne oder nach hinten, wobei der Querträger auf den Oberkanten der Lenker 22 gleitet. Wenn die gewünschte neue Stellung erreicht ist, werden die Teile nach unten gedrückt, so daß das Querelement oder Riegelelement 56 in die dazu eingestellte Rastausnehmung 62 einrückt. Dabei gelangt die Unterseite des Elementes 58 wieder zur vollen Auflage auf den Bodenabschnitt 54 der Tasche. die Rastausnehmungen 62 sind in Bezug auf das Verriegelungselement 56 so gestaltet, daß sie bei Betrieb jeder unerwünschten Aushebebewegung Widerstand entgegensetzen, wobei sie dabei durch die nach unten und nach vorne gerichtete Kraft der Federn 38 unterstützt werden.

Ein Vorteil der neuen Einrichtung besteht darin, daß die Federkraft sich nicht im nennenswerten Ausmaße verändert während das Gerät 14 bewußt angehoben oder abgesenkt wird. Dies beruht auf der koaxialen Lage des Schwenkpunktes 60 gegenüber den oberen Anlenkpunkten 26 der vorderen Enden der oberen Lenker 22. Ein weiterer

10

Vorteil besteht darin, daß der Momentarm auf die Federn sich verändert, um die Kraft der Federn, wenn diese ausgedehnt werden, zu verschieben. Die Ausbildung der Verriegelungselemente 56 und 62 verhindern zufällig oder unerwünschte Veränderungen in der Beziehung zwischen dem Element 58 und dem Querträger 36 in der Arbeitsstellung des Gerätes 14. die Anordnung der Ausnehmungen 62 in dem Element 58 vermeidet eine mögliche Schwächung der oberen Lenker 22, da diese keine Ausnehmungen aufzuweisen brauchen. Die gesamte Anordnung ist sehr einfach und läßt sich billig herstellen und leicht bedienen und weist auch eine lange Lebensdauer auf.

Weitere Vorteile und Merkmale, die nicht ausdrücklich erwähnt sind, ergeben sich für den Fachmann ebenso wie die Möglichkeiten von Abwandlungen gegenüber der bevorzugtenm Ausführungsform, ohne daß dabei von dem Wesen der Lehre der Erfindung und ihrem Schutzumfang abgewichen wird.

11

Patentansprüche

1. Landwirtschaftliche Maschine mit einem Tragteil (16) und einem in senkrechter Ebene beweglichen, dem Tragteil nachlaufenden Gerät (14), das an dem Tragteil (16) über zwei im gegenseitigen Querabstand angeordnete Parallelogrammgestänge abgestützt ist, die jedes einen oberen und einen unteren Lenker (22,24) umfassen, welche mit ihren vorderen Enden an dem Tragteil (16) und mit ihren rückwärtigen Enden an dem Gerät (14) angelenkt sind, und mit einer eine nach unten gerichtete Vorspannkraft auf das Gerät (14) ausübenden Vorspanneinrichtung (34) mit wenigstens eine, Federelement (38), und mit einer Verstelleinrichtung zum Verstellen der Lage eines Endes der Federelemente (38) zur Veränderung der Vorspannkraft, dadurch g e k e n n z e i c h n e t, daß das oder jedes Federelement (38) im wesentlichen senkrecht zu den Lenkern (22,24) orientiert ist und die Verstelleinrichtung eine im Bereich zwischen dem Tragteil (16) und dem Gerät (14) angeordnete und längs der oberen Lenker (22) verstellbare Verbindungseinrichtung (36) aufweist, an der das obere Ende des oder jedes Federelementes (38) verankert ist.

2. Landwirtschaftliche Maschine nach Anspruch 1, dadurch g e k e n n z e i c h n e t, daß die Verbindungseinrichtung einen Querträger (36) aufweist, der den Abstand zwischen den oberen Lenkern (22) überbrückt und auf der Oberseite beider oberen Lenker (22) aufliegt.

3. Landwirtschaftliche Maschine nach Anspruch 2, dadurch g e k e n n z e i c h n e t, daß die Verbindungseinrichtung selektiv in und außer Eingriff verbringbare Elemente (56,62) aufweist, von denen das eine (56) dem Querträger (36) und das andere (62) dem Tragteil (16) zugeordnet ist.

4. Landwirtschaftliche Maschine nach Anspruch 3, dadurch g e k e n n z e i c h n e t, daß das eine der in und außer Eingriff verbringbaren Elemente aus einer Reihe von Rastausnehmungen (62) und das andere aus einem in diese eingreifenden Vorsprung (56) bestehen.

5. Landwirtschaftliche Maschine nach Anspruch 3 oder 4, dadurch g e k e n n z e i c h n e t, daß das eine Element (62) an einem langgestreckten Verbindungsglied (58) vorgesehen ist, dessen vorderes Ende an dem Tragteil (16) angebracht, insb. angelenkt ist, und das sich unter Kreuzen des Querträgers (36) nach hinten erstreckt.

6. Landwirtschaftliche Maschine nach Anspruch 5, dadurch g e k e n n z e i c h n e t, daß der Querträger (36) eine sich von vorne nach hinten erstreckende Tasche (50) zur bereichsweisen Aufnahme des langgestreckten Verbindungsteil (58) aufweist, derart, daß dieser in der Tasche längsverschieblich ist, wenn die Elemente (56,62) außer Eingriff sind, und in der Tasche festliegt, wenn die Elemente (56,62) sich in Eingriff befinden.

7. Landwirtschaftliche Maschine nach Anspruch 6, dadurch g e k e n n z e i c h n e t, daß die Tasche (50) von in gegenseitigem Abstand angeordneten, senkrechten und sich von vorne nach hinten erstreckenden Seitenwänden (52) und einem Bodenabschnitt (54) begrenzt ist, der die unteren Bereiche der Seitenwände (52) starr miteinander verbindet, und daß ein Querelement (56) im Abstand oberhalb des Bodenabschnittes (54) vorgesehen ist, welches mit dem oberen Bereich der beiden Seitenwände (52) starr verbunden und als eines der Eingriffselemente (56,62) ausgebildet ist.

8. Landwirtschaftliche Maschine nach Anspruch 7, dadurch g e k e n n z e i c h n e t, daß das langgestreckte Verbindungsglied (58) die Ausnehmungen (62) auf seiner oberen Längskante aufweist und seine glatte Unterseite auf dem Bodenabschnitt (54) aufsitzt, wenn das Querelement (56) mit einer Ausnehmung (62) in Eingriff steht.

9. Landwirtschaftliche Maschine nach Anspruch 7 oder 8, dadurch g e k e n n z e i c h n e t, daß die vordere Kante des Bodenabschnittes (54) der Tasche (50) im Abstand vor dem Querelement (56) liegt, derart, daß das langgestreckte Verbindungsglied (58) zum Ausrücken der in Eingriff stehenden Elemente (56,62) um die vordere Kante des Bodenabschnittes (54) schwenkbar ist.

10. Landwirtschaftliche Maschine nach einem der Ansprüche 7 bis 9, dadurch g e k e n n z e i c h n e t, daß jede Seitenwand (52) der Tasche (50) starr mit einem Federverankerungsabschnitt des Querträgers (36) verbunden ist.

FIG. 1

FIG. 2

2/2

FIG. 3

FIG. 5

FIG. 4

FIG. 6

FIG. 7